# EUROPÄISCHE PATENTSCHRIFT

(11) **EP 1 505 555 B1**
(45) Veröffentlichungstag und Bekanntmachung des Hinweises auf die Patenterteilung: **06.09.2006**
(21) Anmeldenummer: 04103181.6
(22) Anmeldetag: 06.07.2004
(51) Int. Cl.: G08G 1/0968, G01C 21/26, G01C 21/34, B60K 31/00, B60L 15/20

(54) **Navigationssystem mit Ermittlung einer verbrauchsoptimierten Route**
Navigation system with determination of a route where consumption is optimized
Système de navigation avec détermination d'une route de consommation optimisée

(30) Priorität: 06.08.2003 DE 10335927
(43) Veröffentlichungstag der Anmeldung: 09.02.2005
(73) Patentinhaber: SIEMENS AKTIENGESELLSCHAFT, 80333 München (DE)
(72) Erfinder: Scholl, Gregor, 44265 Dortmund (DE)

(56) Entgegenhaltungen:
- DE-A- 10 141 805
- DE-A- 10 162 866
- DE-U- 29 802 073
- GB-A- 2 338 780
- US-A- 5 627 752
- US-A- 5 790 976
- US-A- 5 913 917

## Beschreibung

Die Erfindung betrifft ein Navigationssystem eines Kraftfahrzeuges mit einer Eingabeeinheit, einer Positionsbestimmungseinheit, einer Recheneinheit mit Mitteln zur Berechnung einer Route zwischen einem ersten und einem zweiten Ort anhand von Kartendaten, die Informationen zur Bestimmung eines voraussichtlichen Kraftstoffverbrauchs für die Route enthalten, und einer Ausgabeeinheit mit Mitteln zur Ausgabe von auf die aktuelle Position des Fahrzeuges abgestimmten Fahrhinweisen. Weiterhin betrifft die Erfindung ein Verfahren zur Bestimmung einer Fahrtroute.

Ein derartiges Navigationssystem und ein derartiges Verfahren sind aus der DE 196 05 458 C1 bekannt. Bei diesem bekannten Navigationssystem wird zunächst durch den Fahrer ein Zielort ausgewählt und anhand von Satellitennavigationssignalen die aktuelle Fahrzeugposition bestimmt. Das Navigationssystem berechnet anschließend mehrere Fahrtrouten von der aktuellen Fahrzeugposition zum Zielort. Dabei wird auch der voraussichtlich benötigte Kraftstoff für jede der Fahrrouten berechnet. Die Berechnung des Kraftstoffverbrauchs erfolgt auf Basis von Höhenänderungen auf den jeweiligen Fahrtrouten. Die hierzu benötigen topologischen Eigenschaften sind zusammen mit den Straßenkartendaten abgespeichert. Unter den verschiedenen Fahrtrouten wird eine bevorzugte Fahrtroute ausgewählt, wobei die bevorzugte Fahrtroute den geringsten Kraftstoffverbrauch aufweist. Die bevorzugte Fahrtroute wird schließlich ausgegeben. Nachteilig ist hierbei, dass der Kraftstoffverbrauch das alleinige Kriterium zur Auswahl einer Fahrtroute ist.

Des Weiteren ist es aus der DE 42 01 142 A1 und der DE 101 29 149 A1 bekannt, einem Fahrgeschwindigkeitsregler Sollwerte von einem Navigationssystem zuzuführen.

Weiterhin ist aus der DE 101 41 805 A1 eine Fahrzeugsteuereinrichtung bekannt, die es erlaubt, Beschleunigungen und Geschwindigkeiten eines Fahrzeugs so vorzugeben, dass das Fahrzeug möglichst energiesparend fährt. Insbesondere können dabei energiesparende Geschwindigkeiten bestimmt werden bezüglich einer an die Fahrzeugsteuereinrichtung vorgegebenen Reisezeit.

Weiterhin ist aus der DE 101 62 866 A1 ein Führungssystem für ein Kraftfahrzeug bekannt, bei dem vordefinierte Reisestrategien, die als Mindestparameter ein Fahrziel und eine Soll-Reisezeit enthalten, vom Fahrer manuell angewählt werden können. Das Führungsverhalten des Kraftfahrzeugs bei einer vordefinierten Reisestrategie kann auf möglichst geringen Kraftstoffverbrauch optimiert sein. Zu diesem Zweck wird vom Führungssystem eine möglichst kurze Fahrstrecke empfohlen.

Aufgabe der Erfindung ist es, ein Navigationssystem der eingangs beschriebenen Art zur Berechnung einer verbrauchsoptimierten Route derart weiterzuentwickeln, dass es besser an die Bedürfnisse eines Benutzers angepasst ist. Eine weitere Aufgabe der Erfindung besteht darin, ein Verfahren zur Bestimmung einer Fahrtroute derart weiterzuentwickeln, dass die Routenauswahl hinsichtlich der Bedürfnisse des Benutzers weiter optimiert wird.

Die beiden Aufgaben werden durch ein Navigationssystem bzw. ein Verfahren mit den Merkmalen der unabhängigen Patentansprüche gelöst.

Von dem Erfinder wurde erkannt, dass die alleinige Berücksichtigung des Kraftstoffverbrauchs bei der Routenauswahl zu unbefriedigenden Ergebnissen für den Benutzer führen kann. So kann insbesondere eine verbrauchsoptimierte Streckenführung eine inakzeptable Fahrzeit aufweisen. Erfindungsgemäß ist daher vorgesehen, dass eine maximale Fahrzeit für eine Fahrt von dem ersten zu dem zweiten Ort, also in der Regel von der gegenwärtigen Position zu dem Zielort, über die Eingabeeinheit vorgebbar ist. Die Fahrtroute wird dann derart bestimmt, dass einerseits die vorgegebene maximale Fahrzeit nicht überschritten wird und andererseits der voraussichtliche Kraftstoffverbrauch minimiert wird. Aus der Vielzahl der möglichen Routen werden somit zunächst diejenigen Routen ausgewählt, für die die berechnete Fahrzeit nicht größer ist als der vorgegebene Maximalwert. Aus dieser Teilmenge wird dann diejenige Route ausgewählt, die den geringsten Kraftstoffverbrauch aufweist. Durch eine Kombination der Kriterien Fahrzeit und Kraftstoffverbrauch wird eine Route generiert, die den Bedürfnissen des verbrauchsbewussten Fahrers entspricht, gleichzeitig jedoch auch seine zeitlichen Randbedingungen berücksichtigt.

Insbesondere ist vorgesehen, dass zu einzelnen Teilstrecken Geschwindigkeitssollwerte unter Berücksichtigung der vorgegebenen maximalen Fahrzeit und topologischer Eigenschaften der Teilstrecken bestimmt werden. Es werden somit insbesondere Steigungs- und Gefällstrecken berücksichtigt. Bei Gefällstrecken wird in der Regel die Geschwindigkeit höher und der Kraftstoffverbrauch niedriger sein als bei entsprechenden Steigungsstrecken. Andererseits kann eine starke Gefällstrecke zwar einen geringen Kraftstoffverbrauch zur Folge haben, jedoch auf Grund der Streckenführung mit vielen Kurven nur eine beschränkte Geschwindigkeit zulassen. Bei der Planung der Strecken wird somit anhand bekannter Daten für jede Teilstrecke eine Fahrsituation hinsichtlich Geschwindigkeit und Verbrauch errechnet. Die Summe dieser einzelnen Werte ergibt die gewünschte Fahrzeit mit der Randbedingung des minimalen Verbrauchs.

In einer Weiterbildung der Erfindung ist vorgesehen, dass das Navigationssystem zur Ansteuerung einer Geschwindigkeitsregelanlage des Kraftfahrzeuges mit den berechneten Geschwindigkeitssollwerten der Teilstrecken abhängig von der aktuellen Position ausgelegt ist. Bei dieser Ausgestaltung wird somit nicht lediglich eine optimierte Route ausgewählt, sondern es wird zusätzlich mit den der Berechnung zugrunde gelegten Geschwindigkeitswerten eine Geschwindigkeitsregelanlage des Kraftfahrzeuges angesteuert. Während der Fahrt wird durch permanenten Soll-Ist-Abgleich die der Routenberechnung zugrunde liegende Situation so genau wie möglich abgebildet.

In einer Weiterbildung ist die Geschwindigkeitsregelanlage zusätzlich mit einer Abstandsregelanlage verbunden. Durch das Navigationssystem werden Sollwerte für die Geschwindigkeitsregelanlage vorgegeben, die jedoch durch Informationen der Abstandsregelanlage, und somit beispielsweise die Geschwindigkeit eines vorausfahrenden Fahrzeuges, übersteuert werden können. Hiermit wird in gewisser Weise ein automatisiertes Fahren erreicht.

Die Berechnung des Kraftstoffverbrauchs durch die Recheneinheit kann auf unterschiedlichste Art erfolgen. In einer ersten Ausführungsform ist dazu vorgesehen, dass die Berechnung des Kraftstoffverbrauchs anhand von topologischen Eigenschaften der berechneten Route erfolgt. Hierbei werden Steigungs- und Gefällstrecken berücksichtigt und beispielsweise ein mittlerer Kraftstoffverbrauch des Fahrzeuges entsprechend gewichtet.

In einer anderen Ausführungsform enthalten die Kartendaten zusätzlich Daten hinsichtlich eines relativen Kraftstoffverbrauchs von Teilstrecken. Hierbei ist also direkt bei den Kartendaten eine Angabe zu einem relativen Kraftstoffverbrauch angegeben. Dieser relative Wert kann jeweils in einen für das jeweilige Fahrzeug repräsentativen Wert umgerechnet werden.

Die Berechnung des Kraftstoffverbrauchs anhand der topologischen Eigenschaften bzw. anhand eines in den Kartendaten enthaltenen relativen Kraftstoffverbrauchs von Teilstrecken in einen absoluten Kraftstoffverbrauch des entsprechenden Fahrzeuges kann insbesondere dadurch erfolgen, dass Kennlinien oder ein Algorithmus zur Bestimmung des Kraftstoffverbrauchs des Kraftfahrzeuges unter unterschiedlichen Fahrbedingungen abgespeichert sind.

In einer Weiterbildung der Erfindung ist vorgesehen, dass mit dem Navigationssystem zusätzlich eine schnellste oder eine kürzeste Route einschließlich des erwarteten Kraftstoffverbrauchs berechenbar und zur Auswahl anzeigbar ist. Neben der verbrauchsoptimierten Route, deren Fahrzeit innerhalb des Vorgabewertes liegt, wird hierbei zusätzlich nun die schnellste Route zwischen dem ersten und dem zweiten Ort oder die kürzeste Route zwischen dem ersten und dem zweiten Ort bestimmt, wobei auch hierzu der jeweilige erwartete Kraftstoffverbrauch berechnet wird. Diese schnellste oder kürzeste Route wird zusätzlich zur Auswahl angezeigt, so dass der Fahrer beispielsweise vergleichen kann, wie groß der Zeitunterschied und der Verbrauchsunterschied zwischen der schnellsten und der verbrauchsoptimierten Route ist. Der Fahrer kann dann frei auswählen, welche der Routen er bevorzugt. Hierdurch kann die Zufriedenheit des Fahrers mit der gewählten Strecke weiter erhöht werden.

Bei einem erfindungsgemäßen Verfahren zur Bestimmung einer Fahrtroute zwischen einem Start- und einem Zielort anhand von Straßenkartendaten, die Straßenklassen, topologische Eigenschaften und Geschwindigkeitsbeschränkungen beinhalten, sind die folgenden Verfahrensschritte vorgesehen:
- Berechnen von Routen zwischen dem Start- und dem Zielort, deren erwartete Fahrzeit kleiner ist als ein Vorgabewert,
- Bestimmung eines Kraftstoffverbrauchs für die berechneten Routen,
- Auswahl der Route mit dem geringsten Kraftstoffverbrauch.
Insbesondere wird dabei der Kraftstoffverbrauch unter Berücksichtigung der topologischen Eigenschaften, der Straßenklasse und Geschwindigkeitsbeschränkung von einzelnen Teilrouten sowie von fahrzeugspezifischen Vorgaben berechnet.

In einer besonderen Ausführungsform ist vorgesehen, dass zunächst die schnellste Route zwischen dem ersten und dem zweiten Ort berechnet wird und die Fahrzeit für die schnellste Route angezeigt wird, damit der Fahrer einen Anhaltspunkt für die Fahrzeitvorgabe erhält. Anschließend erfolgt die Eingabe des Vorgabewerts und die Berechnung der verbrauchsoptimierten Routen.

Die Erfindung wird nachfolgend anhand eines Ausführungsbeispiels und der Zeichnung näher erläutert. Es zeigen:
- Figur 1: ein Navigationssystem, das mit einer Geschwindigkeitsregelanlage verbunden ist,
- Figur 2: einen Verfahrensablauf eines erfindungsgemäßen Verfahrens.

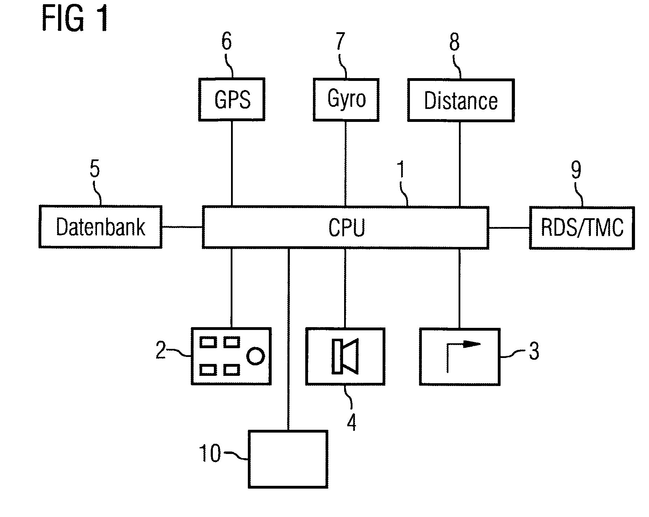

In Figur 1 sind die Komponenten eines Navigationssystems für Kraftfahrzeuge schematisch dargestellt. Zentraler Bestandteil des Navigationssystems ist die Recheneinheit (CPU) 1, die auch die erforderlichen Speicherelemente enthält. Mit der CPU 1 ist eine Bedieneinheit 2 verbunden, über die beispielsweise der Zielort eingegeben oder ausgewählt werden kann. Die Bedieneinheit 2 enthält dazu beispielsweise ein oder mehrere Bedienelemente zur Steuerung eines Cursors. Die Bedieneinheit 2 kann im gleichen Gehäuse wie die CPU 1 untergebracht sein, jedoch kann die Bedieneinheit 2 auch als Fernbedienung ausgebildet sein, die mit der CPU 1 beispielsweise über eine optische Schnittstelle oder eine Funkschnittstelle in Verbindung steht.

Mit der CPU 1 ist eine optische Ausgabeeinheit 3 verbunden, über die eine Kartendarstellung und Zielführungsinformation sowie sonstige Informationen ausgegeben werden können. Die Zielführungsinformationen können weiterhin über einen Lautsprecher 4 akustisch ausgegeben werden.

Die CPU 1 ist ferner mit einer Datenbank 5 verbunden, die die Landkartendaten enthält. Diese Daten sind beispielsweise auf einer CD-ROM oder einer DVD abgespeichert. In diesem Falle enthält das Navigationssystem ein CD-ROM- bzw. DVD-Laufwerk, das mit der CPU 1 verbunden ist. Anhand der Landkartendaten kann von der CPU 1 bei bekanntem Start- und Zielort in erfindungsgemäßer Weise eine Berechnung der optimalen Route durchgeführt werden, die dann über die optische Ausgabeeinheit 3 ausgegeben werden kann.

Zur Bestimmung der aktuellen Fahrzeugposition enthält das Navigationssystem ferner einen Empfänger 6 zum Empfang von Navigationssignalen. Um eine von Satelliten unabhängige Positionsbestimmung durchführen zu können, enthält das Navigationssystem ferner einen Richtungssensor 7 und einen Wegsensor 8, die ebenfalls mit der CPU 1 verbunden sind, so dass mit Hilfe eines geeigneten Computerprogramms mit diesen Signalen eine Positionsbestimmung möglich ist.

Ferner ist die CPU 1 im dargestellten Beispiel zusätzlich mit einem Rundfunkempfänger 9 verbunden, der zum Empfang von RDS-TMC-Signalen ausgebildet ist. Somit können empfangene Verkehrsinformationen vom Rundfunkempfänger 9 an die CPU 1 weitergeleitet und zur Berücksichtigung bei der Routenberechnung herangezogen werden. Alternativ können Verkehrsinformationen auch über ein Mobilfunkgerät, insbesondere nach dem GSM-Standard, empfangen und an die Recheneinheit weitergeleitet werden.

Abweichend von dem beschriebenen Navigationssystem können die Landkartendaten auch über das Mobilfunkgerät von einer zentralen Servicestelle in das Fahrzeug übertragen werden. In diesem Falle kann ein Lesegerät für ein Speichermedium mit den Landkartendaten im Fahrzeug entfallen. Entsprechende Navigationssysteme sind prinzipiell bekannt.

Weiterhin ist die CPU 1 über eine entsprechende Schnittstelle und ein Kraftfahrzeug-BUS-System mit einer Geschwindigkeitsregelanlage 10 verbunden. Die CPU 1 liefert Sollwerte an die Geschwindigkeitsregelanlage 10, die bei der Routenberechnung einer Fahrzeitermittlung zugrunde gelegt wurden. Ist-Werte der Geschwindigkeit erhält die Geschwindigkeitsregelanlage 10 über ein Tachometersignal. Das Regelsignal der Geschwindigkeitsregelanlage 10 wird einem Turbolader bzw. einer Gemischaufbereitung, einem Einspritzsystem oder einem Getriebe zugeführt. Geschwindigkeitsregelanlagen sind an sich bekannt, so dass weitere Einzelheiten hier nicht näher beschrieben werden müssen.

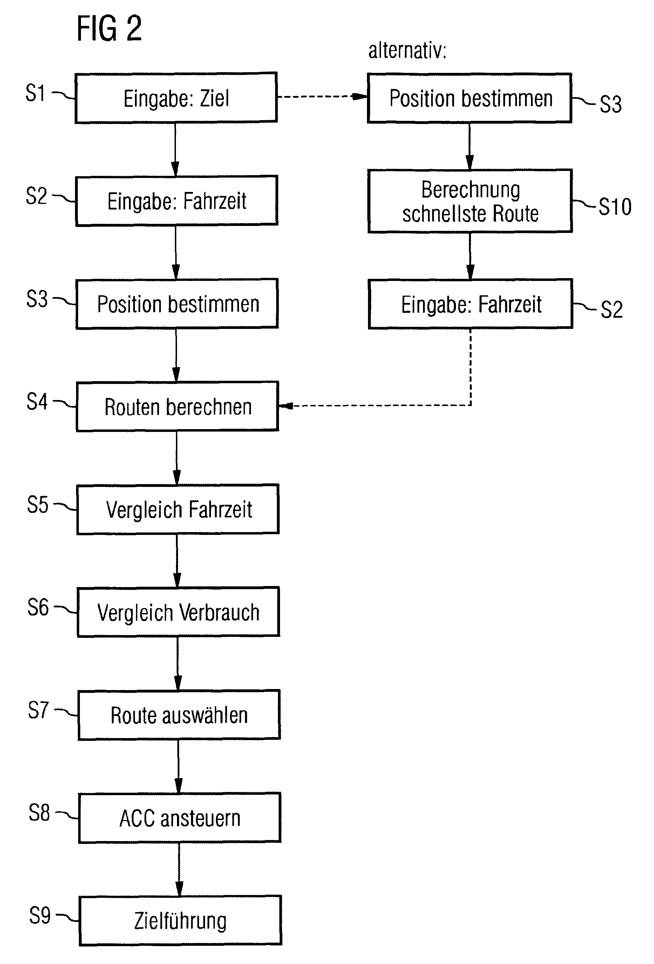

In der CPU 1 wird unter anderem die Fahrtroute in erfindungsgemäßer Weise berechnet. Ein entsprechender Algorithmus wird anhand von Figur 2 erläutert. In Schritt S1 gibt der Fahrer zunächst den gewünschten Zielort über die Eingabeeinheit 2 in das Navigationssystem ein oder wählt den Zielort aus einer Liste des Navigationssystems aus. In Schritt S2 gibt der Fahrer zusätzlich die von ihm maximal akzeptierte Fahrzeit ein. In Schritt S3 wird die Fahrzeugposition bestimmt. Dies erfolgt in der Regel durch Auswertung der vom Empfänger 6 gelieferten Satellitennavigationssignale. In Schritt S4 werden verschiedene Routen zwischen der aktuellen Position und dem Zielort berechnet. In Schritt S5 werden die berechneten Routen hinsichtlich ihrer Fahrzeit mit dem in Schritt S2 eingegebenen Vorgabewert verglichen. Dabei werden nur solche Routen beibehalten, deren Fahrzeit nicht größer als der Vorgabewert ist. Alternativ kann auch in Schritt S4 bei Berechnung jeder einzelnen Route bereits ein Vergleich der Fahrzeit mit dem Vorgabewert durchgeführt werden und eine Route sofort verworfen werden, wenn die Fahrzeit größer als der Vorgabewert ist.

In Schritt S4 wurde bei der Routenberechnung neben der Fahrzeit auch ein voraussichtlicher Kraftstoffverbrauch für die einzelnen Routen bestimmt. In Schritt S6 werden die Routen nun hinsichtlich des Kraftstoffverbrauchs verglichen, und es wird diejenige Route ausgewählt, die den geringsten Kraftstoffvergleich aufweist (Schritt S7). Bei der Routenauswahl in Schritt S7 kann alternativ neben der Route mit dem geringsten Kraftstoffverbrauch zusätzlich auch die schnellste Route ausgewählt werden und beide Routen mit den Vergleichsdaten auf der Anzeigeeinheit 3 angezeigt werden. Der Fahrer kann dann wählen, ob er die schnellste Route oder die verbrauchsoptimierte Route nutzen möchte.

Während der Fahrt auf der ausgewählten Route wird von dem Navigationssystem die Geschwindigkeitsregelanlage 10 in Schritt S8 angesteuert, wobei die der Routenberechnung zugrunde liegende Geschwindigkeit für das aktuell befahrende Teilstück als Sollwert an die Geschwindigkeitsregelanlage 10 ausgegeben wird. Zudem erfolgt in Schritt S9 die Ausgabe von Zielführungsinformationen, wie dies von herkömmlichen Navigationssystemen her bekannt ist.

In einer Abwandlung des Verfahrens kann nach Eingabe des Zielortes (Schritt S1) und der Positionsbestimmung (Schritt S3) auch zunächst die schnellste Route berechnet und ausgegeben werden (Schritt S10). Anhand der Fahrzeit für die schnellste Route kann der Fahrer dann eine noch tolerierte maximale Fahrzeit (Schritt S2) für eine verbrauchsoptimierte Route vorgeben. Anschließend erfolgt dann die Berechnung der verbrauchsoptimierten Route in Schritt S4 in der oben näher beschriebenen Weise, wobei anschließend die schnellste und die verbrauchsoptimierte Route dem Fahrer zur Auswahl angezeigt werden. Auf diese Weise wird vermieden, dass der Fahrer unrealistische Vorgaben für die Fahrzeit in Schritt S2 eingibt.

## Patentansprüche

1. Navigationssystem eines Kraftfahrzeuges mit
- einer Eingabeeinheit (2),
- einer Positionsbestimmungseinheit (6, 7, 8),
- einer Recheneinheit (1)
- mit Mitteln zur Berechung einer Mehrzahl von Routen zwischen einem ersten und einem zweiten Ort anhand von Kartendaten, die Informationen zur Bestimmung eines voraussichtlichen Kraftstoffverbrauchs für die Routen enthalten, und
- mit Mitteln zur Berechnung des voraussichtlichen Kraftstoffverbrauchs für die Routen und
- mit Mitteln zur Auswahl einer der Routen als Fahrtroute unter Berücksichtigung des berechneten voraussichtlichen Kraftstoffverbrauchs,
- einer Ausgabeeinheit (3, 4) mit Mitteln zur Ausgabe von auf die aktuelle Position des Fahrzeuges abgestimmten Fahrhinweisen zur Fahrtroute, **dadurch gekennzeichnet, dass** eine maximale Fahrzeit für eine Fahrt von dem ersten zu dem zweiten Ort über die Eingabeeinheit vorgebbar ist und die Fahrtroute derart bestimmt wird, dass die vorgegebene maximale Fahrzeit nicht überschritten und der voraussichtliche Kraftstoffverbrauch minimiert wird.

2. Navigationssystem nach Anspruch 1, **dadurch gekennzeichnet, dass** zu einzelnen Teilstrecken Geschwindigkeitssollwerte unter Berücksichtigung der vorgegebenen maximalen Fahrzeit und topologischer Eigenschaften der Teilstrecken bestimmt werden.

3. Navigationssystem nach Anspruch 1 oder 2, **dadurch gekennzeichnet, dass** es zur Ansteuerung einer Geschwindigkeitsregelanlage (10) des Kraftfahrzeuges mit den berechneten Geschwindigkeitssollwerten der Teilstrecken abhängig von der aktuellen Position ausgelegt ist.

4. Navigationssystem nach einem Anspruch 3, **dadurch gekennzeichnet, dass** die Geschwindigkeitsregelanlage (10) mit einer Abstandsregelanlage verbunden ist.

5. Navigationssystem nach einem der vorhergehenden Ansprüche, **dadurch gekennzeichnet, dass** die Recheneinheit zur Berechnung Kraftstoffverbrauchs anhand von topologischen Eigenschaften der berechneten Route ausgelegt ist.

6. Navigationssystem nach einem der vorhergehenden Ansprüche, **dadurch gekennzeichnet, dass** die Kartendaten Daten hinsichtlich eines relativen Kraftstoffverbrauchs von Teilstrecken enthalten.

7. Navigationssystem nach einem der vorhergehenden Ansprüche, **dadurch gekennzeichnet, dass** Kennlinien oder ein Algorithmus zur Bestimmung des Kraftstoffverbrauchs des Kraftfahrzeuges unter unterschiedlichen Fahrbedingungen abgespeichert sind.

8. Navigationssystem nach einem der vorhergehenden Ansprüche, **dadurch gekennzeichnet, dass** zusätzlich eine schnellste oder eine kürzeste Route einschließlich des erwarteten Kraftstoffverbrauchs berechenbar und zur Auswahl anzeigbar ist.

9. Verfahren zur Bestimmung einer Fahrtroute zwischen einem Start- und einem Zielort anhand von Straßenkartendaten, die Straßenklassen, topologische Eigenschaften und Geschwindigkeitsbeschränkungen beinhalten, mit den Verfahrensschritten:
- Berechnen von Routen zwischen dem Start- und dem Zielort, deren erwartete Fahrzeit kleiner ist als ein Vorgabewert,
- Bestimmung eines Kraftstoffverbrauchs für die berechneten Routen,
- Auswahl der Route mit dem geringsten Kraftstoffverbrauch.

10. Verfahren nach Anspruch 9, **dadurch gekennzeichnet, dass** der Kraftstoffverbrauch unter Berücksichtigung der topologischen Eigenschaften, der Straßenklasse und Geschwindigkeitsbeschränkungen von einzelnen Teilrouten sowie von fahrzeugspezifischen Vorgaben berechnet wird.

11. Verfahren nach einem der vorhergehenden Ansprüche, **dadurch gekennzeichnet, dass** zusätzlich eine schnellste oder eine kürzeste Route einschließlich des erwarteten Kraftstoffverbrauchs berechnet und einem Fahrer zur Auswahl angezeigt wird.

12. Verfahren nach Anspruch 11, **dadurch gekennzeichnet, dass** zunächst die schnellste Route zwischen dem ersten und dem zweiten Ort berechnet wird, die Fahrzeit für die schnellste Route angezeigt wird, anschließend die Eingabe eines Vorgabewertes für eine Fahrzeit auf einer verbrauchsoptimierten Route und die Berechnung einer verbrauchsoptimierten Route erfolgt, deren Fahrzeit kleiner ist als der Vorgabewert.

13. Verfahren nach einem der vorhergehenden Ansprüche, **dadurch gekennzeichnet, dass** die fahrzeugspezifischen Daten Verbrauchskennlinien oder ein Algorithmus zur Bestimmung des Kraftstoffverbrauchs des Kraftfahrzeugs unter unterschiedlichen Fahrbedingungen sind.

## Claims

1. Navigation system of a motor vehicle having
- an input unit (2),
- a position-determining unit (6, 7, 8),
- a central processor unit (1)
- having means for calculating a plurality of routes between a first and a second location by reference to map data, which contains information for determining a predicted fuel consumption for the routes, and
- having means for calculating the predicted fuel consumption for the routes, and
- having means for selecting one of the routes as an actual route, taking into account the calculated predicted fuel consumption,
- an output unit (3, 4) having means for outputting travel instructions relating to the route which are matched to the current position of the vehicle, **characterized in that** a maximum travel time for a journey from the first location to the second location can be predefined by means of the input unit, and the route is determined in such a way that the predefined maximum travel time is not exceeded, and the anticipated fuel consumption is minimized.

2. Navigation system according to Claim 1, **characterized in that** speed setpoint values are determined for individual parts of a route taking into account the predefined maximum travel time and topological properties of the parts of a route.

3. Navigation system according to Claim 1 or 2, **characterized in that** it is configured to actuate a speed control system (10) of the motor vehicle using the calculated speed setpoint values of the parts of a route as a function of the current position.

4. Navigation system according to Claim 3, **characterized in that** the speed control system (10) is connected to an inter-vehicle distance control system.

5. Navigation system according to one of the preceding claims, **characterized in that** the central processor unit is configured to calculate the fuel consumption by reference to topological properties of the calculated route.

6. Navigation system according to one of the preceding claims, **characterized in that** the map data contains data relating to a relative fuel consumption of parts of a route.

7. Navigation system according to one of the preceding claims, **characterized in that** characteristic curves or an algorithm for determining the fuel consumption of the motor vehicle under different travel conditions are stored.

8. Navigation system according to one of the preceding claims, **characterized in that**, in addition, a fastest or a shortest route including the anticipated fuel consumption can be calculated and can be displayed for selection.

9. Method for determining a route between a starting point and a destination by reference to road map data which includes road classes, topological properties and speed restrictions, having the method steps:
- routes whose anticipated travel time is shorter than a predefined value are calculated between the starting point and the destination,
- a fuel consumption for the calculated routes is determined,
- the route with the lowest fuel consumption is selected.

10. Method according to Claim 9, **characterized in that** the fuel consumption is calculated taking into account the topological properties, the road class and speed restrictions of individual parts of a route as well as vehicle-specific prescriptions.

11. Method according to one of the preceding claims, **characterized in that**, in addition, a fastest route or a shortest route including the anticipated fuel consumption is calculated and displayed to a driver for selection.

12. Method according to Claim 11, **characterized in that**, at first, the fastest route between the first location and the second location is calculated, the travel time for the fastest route is displayed, a predefined value for a travel time on a route with optimized consumption is then input and a route which has optimized consumption and whose travel time is shorter than the predefined value is calculated.

13. Method according to one of the preceding claims, **characterized in that** the vehicle-specific data is consumption characteristic curves or an algorithm for determining the fuel consumption of the motor vehicle under different travel conditions.

## Revendications

1. Système de navigation d'un véhicule automobile comportant:
- une unité de saisie (2),
- une unité de détermination de la position (6, 7, 8),
- une unité de calcul (1)
- avec des moyens pour le calcul d'une pluralité d'itinéraires entre une première localité et une deuxième localité à l'aide de données cartographiques qui renferment des informations pour la détermination d'une consommation probable en carburant rapportée aux itinéraires, et
- avec des moyens pour le calcul de la consommation probable en carburant rapportée aux itinéraires, et
- des moyens permettant de sélectionner l'un des itinéraires en tant que trajet de voyage en tenant compte de la consommation en carburant probable calculée,
- une unité de sortie (3, 4) avec des moyens permettant d'éditer des indications relatives au trajet de voyage sur la base de la position actuelle du véhicule,
**caractérisé en ce qu'**il est possible de prescrire, par l'intermédiaire de l'unité de saisie, une durée maximum de trajet pour un déplacement entre la première et la deuxième localité et que le trajet de voyage est déterminé de telle manière que la durée maximum de trajet donnée n'est pas dépassée et que la consommation probable en carburant est minimisée.

2. Système de navigation selon la revendication 1 **caractérisé en ce que** des valeurs de consigne pour la vitesse sont déterminées, pour les différentes sections de l'itinéraire, en tenant compte de la durée maximum de trajet donnée et des propriétés topologiques des sections de l'itinéraire.

3. Système de navigation selon la revendication 1 ou 2 **caractérisé en ce qu'**il est configuré pour commander, en fonction de la position actuelle, un système de régulation de la vitesse (10) du véhicule automobile avec les valeurs de consigne calculées pour la vitesse sur les sections de l'itinéraire.

4. Système de navigation selon la revendication 3 **caractérisé en ce que** le système de régulation de la vitesse (10) est relié à un système de régulation des espacements entre véhicules.

5. Système de navigation selon l'une des revendications précédentes **caractérisé en ce que** l'unité de calcul est configurée pour calculer la consommation en carburant à l'aide des propriétés topologiques de l'itinéraire calculé.

6. Système de navigation selon l'une des revendications précédentes **caractérisé en ce que** les données cartographiques renferment des données concernant une consommation relative de carburant pour des sections d'itinéraires.

7. Système de navigation selon l'une des revendications précédentes **caractérisé en ce que** des courbes caractéristiques ou un algorithme destiné à la détermination de la consommation en carburant du véhicule automobile sous différentes conditions de conduites, sont mémorisés.

8. Système de navigation selon l'une des revendications précédentes **caractérisé en ce que**, en supplément, il est possible de calculer et d'offrir à la sélection un itinéraire le plus rapide ou un itinéraire le plus court, y compris la consommation en carburant attendue.

9. Méthode destinée à déterminer un itinéraire entre un point de départ et un point de destination à l'aide de données de cartographie routière, qui renferment des catégories de routes, des propriétés topologiques et des limitations de vitesse, et comportant les phases suivantes:
- calcul d'itinéraires entre le point de départ et le point de destination, dont la durée de parcours attendue est inférieure à une valeur de consigne,
- détermination d'une consommation en carburant pour les itinéraires calculés,
- sélection de l'itinéraire ayant la consommation en carburant la plus faible.

10. Méthode selon la revendication 9 **caractérisée en ce que** la consommation en carburant est calculée en tenant compte des propriétés topologiques, de la catégorie des routes et de limitations de vitesse des différentes sections d'itinéraires, ainsi que de données de consigne spécifiques au véhicule.

11. Méthode selon l'une des revendications précédentes **caractérisée en ce que**, en supplément, un itinéraire le plus rapide ou un itinéraire le plus court, y compris la consommation en carburant attendue, sont calculés et affichés pour une sélection par le conducteur.

12. Méthode selon la revendication 11 **caractérisée en ce que**, d'abord l'itinéraire le plus rapide entre la première et la deuxième localité est calculé, la durée du trajet pour l'itinéraire le plus rapide est affichée, et, ensuite, sont effectués la saisie d'une valeur de consigne pour une durée de trajet sur un itinéraire dont la consommation en carburant est optimisée et le calcul d'un itinéraire à consommation en carburant optimisée, dont la durée de parcours est inférieure à la valeur de consigne.

13. Méthode selon l'une des revendications précédentes **caractérisée en ce que** les données spécifiques au véhicule sont des courbes caractéristiques de la consommation en carburant ou un algorithme destiné à la détermination de la consommation en carburant du véhicule automobile sous différentes conditions de conduite.
